# EUROPEAN PATENT SPECIFICATION

(11) **EP 3 577 016 B1**
(45) Date of publication and mention of the grant of the patent: **02.12.2020**
(21) Application number: 18706306.0
(22) Date of filing: 25.01.2018
(51) Int. Cl.: B62J 1/12, B62J 7/08, B62K 19/46

(54) **STORAGE ASSEMBLY FOR A MOTORCYCLE PROVIDED WITH AN OBJECT BLOCKING SYSTEM**
LAGERANORDNUNG FÜR EIN MOTORRAD MIT EINEM OBJEKTBLOCKIERSYSTEM
ENSEMBLE DE STOCKAGE POUR MOTOCYCLETTE POURVU D'UN SYSTÈME DE BLOCAGE D'OBJET

(30) Priority: 31.01.2017 IT 201700010108; 31.01.2017 IT 201700009993
(43) Date of publication of application: 11.12.2019
(73) Proprietor: PIAGGIO & C. S.p.A., 56025 Pontedera (Pisa) (IT)
(72) Inventor: SANTUCCI, Mario Donato, 56025 POntedera (Pisa) (IT)
(74) Representative: Carangelo, Pierluigi
(86) International application number: PCT/IB2018/050455
(87) International publication number: WO 2018/142245

(56) References cited:
- EP-A1- 1 683 716
- ES-U- 1 094 830

## Description

The present invention in general relates to the field of motorcycles and more specifically, to a storage assembly of a motorcycle as defined in the preamble of claim 1.

Document EP1683716A1 shows the preamble of claim 1.

The application is known on certain types of motorcycles, in particular but not exhaustively two- or several-wheel motor scooters, of storage compartments or helmet compartments obtained both under the saddle and in the form of a storage container such as e.g. a top box applied to or integrated in the rear part of the vehicle.

In the case of undersaddle compartment, the use of openable saddles for allowing access to the compartment itself, is widespread. Traditional saddles for motorcycles usually are made from a rigid support called a "saddle plate" which carries a padded part filled with polyurethane foam, and are provided with support and coupling means to the frame. Such saddles typically are connected to the frame so as to take on an open configuration which allows access to the undersaddle compartment, and a closed configuration in which the saddle closes the undersaddle compartment at the top, thus preventing access to such a compartment.

In the case of top box compartments, located in or fastened to the rear part, such top boxes usually consist of a storage compartment and of a lid hinged to the storage compartment so as to take on an open configuration which allows access to the storage compartment, and a closed configuration in which the lid closes the storage compartment at the top, thus preventing access to the latter.

The storage compartment of the top box or the saddle normally consists of a rigid body which serves as container with a closed bottom which, as described above, is suitable for being closed at the top by a lid or a saddle, which serves as lid of the undersaddle compartment by means of the saddle plate.

One drawback of the undersaddle compartments and top boxes of the known art is due to the fact that when the storage compartment is used to transport one or two helmets (driver and passenger), in certain cases, due to the sizes and volume thereof, they could undergo even minimum movements in the compartment during the use of the motorcycle. To the extent the sturdiness of the helmets themselves prevents the helmets from being seriously damaged, they may damage the paint or surface finish with knocks or rubbing, in addition to inducing noise.

In addition, it has to be noted that the storage compartment of the top box or the saddle may also be used for transporting any other object, which is more or less smaller, more or less fragile. This, in particular manner, when the motorcycle on which there is the storage compartment is being operated and the helmet is worn by the driver.

Another drawback of the known art is due to the fact that when the storage compartment is used to transport various-sized objects other than helmets, they are retained with difficulty by the walls of the compartment and accordingly, following for example jolts to which the motorcycle is subjected during operation, in addition to knocking against the walls of the storage compartment and being damaged, they may bounce and generate noise.

It is an object of the present description to provide a storage assembly of a motorcycle which allows the above drawbacks to be resolved or at least partly obviated.

This and other objects are achieved by means of an assembly comprising a lid and a storage compartment for a motorcycle as defined in claim 1 in the most general embodiment thereof, and in the claims dependent thereon in certain particular embodiments thereof.

A motorcycle as defined in claim 8 is also the object of the present invention.

The invention will be better understood from the following detailed description of embodiments thereof, given by way of example and therefore non-limiting in relation to the accompanying drawings, in which:

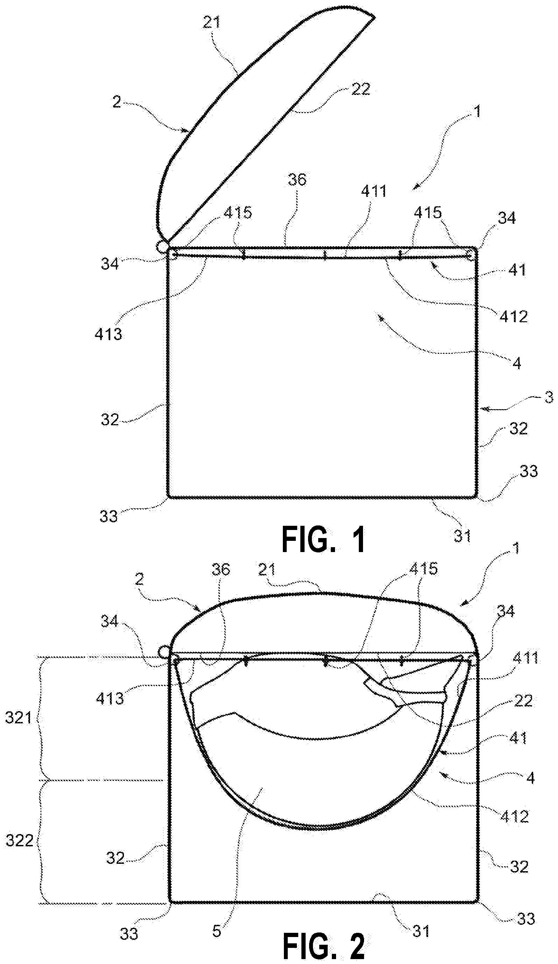

- Fig. 1 is a flat diagrammatic side cross section view depicting an assembly according to a first ambodiment and in particular a top box for a motorcycle, comprising a lid and a storage compartment, there being depicted in such a drawing the lid in an open configuration and an object blocking system according to a first embodiment, for blocking an object in the storage container, such an object blocking system being depicted in a first configuration;
- Fig. 2 is a diagrammatic side cross section view of the assembly in Fig. 1, in which the lid is depicted in a closed configuration and in which the object blocking system of Fig. 1 is depicted in a second configuration while it blocks an object accommodated in the storage compartment;

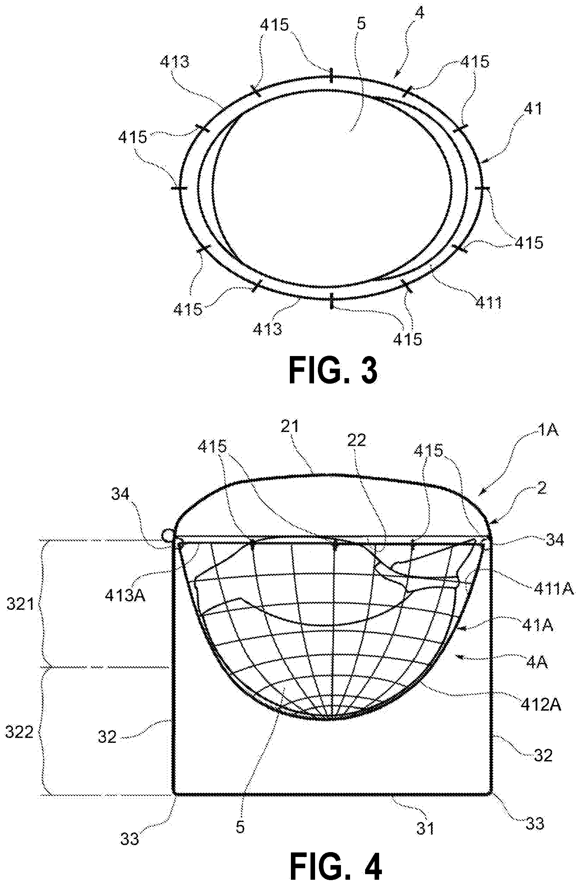

- Fig. 3 is a flat and diagrammatic top view of the object blocking system in Fig. 1 and of the object in Fig. 2 in the configuration in Fig. 2;
- Fig. 4 is a diagrammatic side cross section view depicting a top box for a motorcycle comprising a lid and a storage compartment, there being depicted in Fig. 4 the lid in a closed configuration and an object blocking system according to a further embodiment, for blocking an object in the storage compartment, such an object blocking system being depicted in a configuration similar to the one of the object blocking system in Fig. 2 and while it blocks the object in Fig. 2;

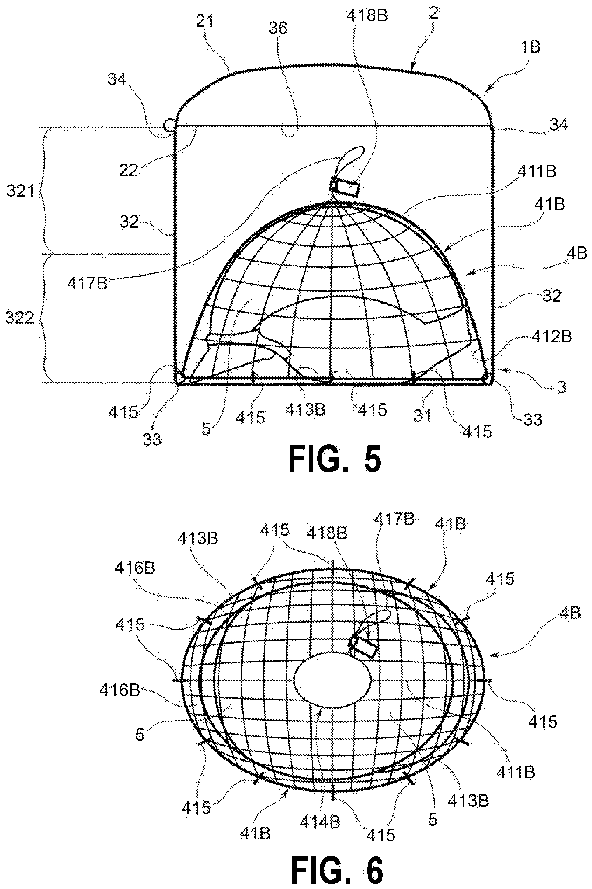

- Fig. 5 is a diagrammatic side cross section view depicting a top box comprising a lid and a storage compartment for a motorcycle, there being depicted in Fig. 5 the lid in a closed configuration and an object blocking system according to a further embodiment, for blocking an object in the storage compartment, such an object blocking system being depicted in a configuration in which it blocks the object in Fig. 2;
- Fig. 6 is a flat and diagrammatic top view of the object blocking system in Fig. 5 and of the object in Fig. 5 in the configuration in Fig. 5;

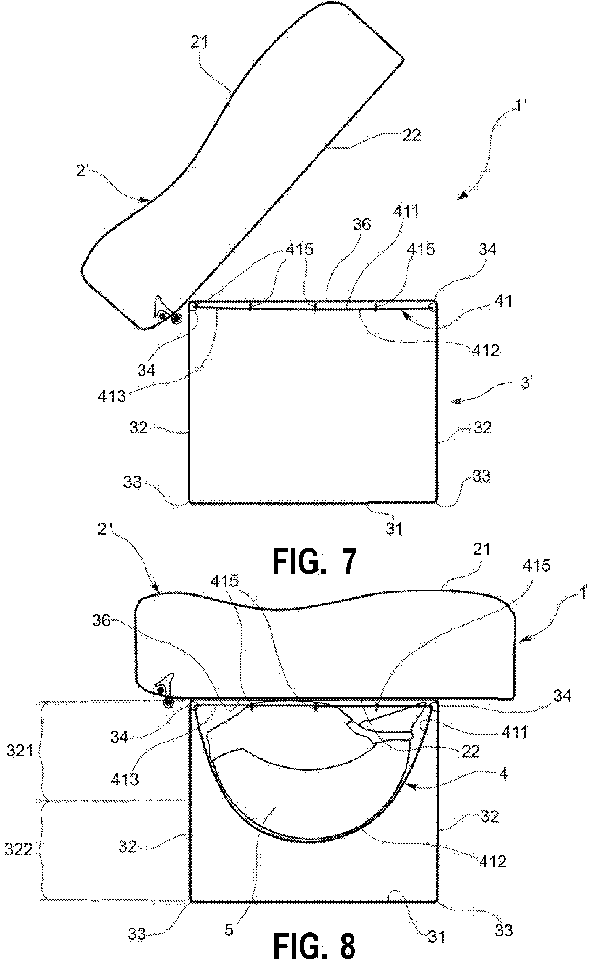

- Fig. 7 is a flat diagrammatic side cross section view depicting an assembly according to a second embodiment and in particular an assembly comprising a saddle and an undersaddle compartment for a motorcycle, there being depicted in such a drawing the saddle in an open configuration and an object blocking system according to a further embodiment, for blocking an object in the undersaddle compartment, such an object blocking system being depicted in a first configuration;
- Fig. 8 is a diagrammatic side cross sectional view of the assembly in Fig. 7, in which the saddle is depicted in a closed configuration and in which the object blocking system in Fig. 7 is depicted in a second configuration while it blocks an object accommodated in the undersaddle compartment;

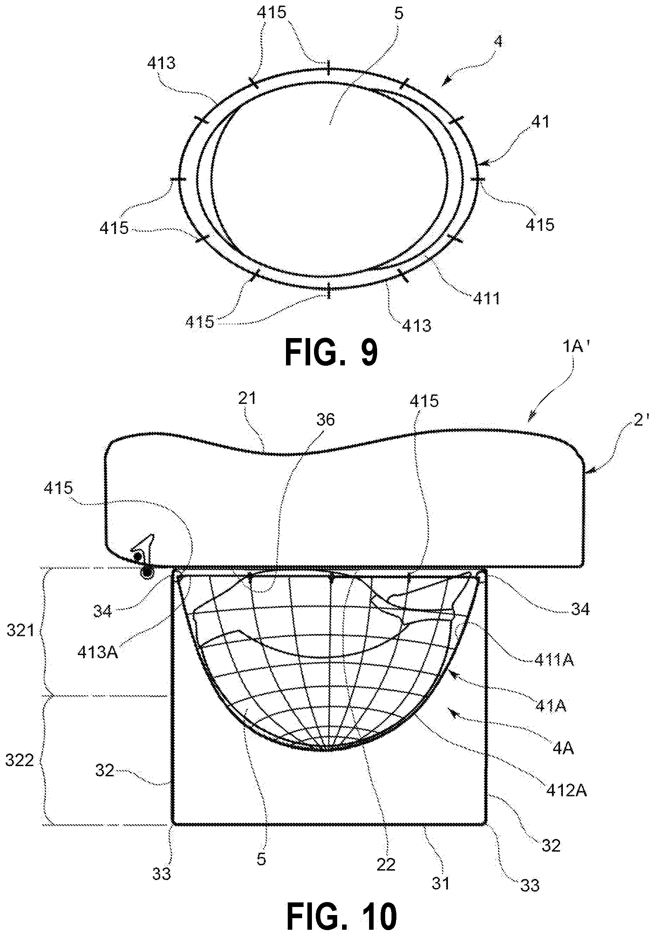

- Fig. 9 is a flat and diagrammatic top view of the object blocking system in Fig. 7 and of the object in Fig. 8 in the configuration in Fig. 8;
- Fig. 10 is a diagrammatic side cross sectional view depicting an assembly comprising a saddle and an undersaddle compartment for a motorcycle, there being depicted in Fig. 10 the saddle in a closed configuration and an object blocking system according to a further embodiment, for blocking an object in the undersaddle compartment, such an object blocking system being depicted in a configuration similar to the one of the object blocking system in Fig. 8 and while it blocks the object in Fig. 8;

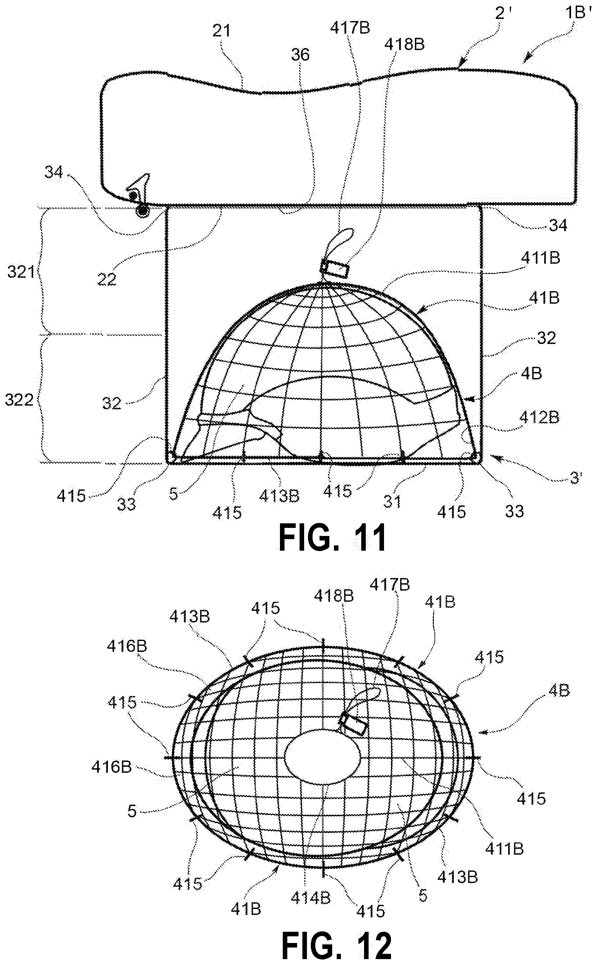

- Figure 11 is a diagrammatic side cross sectional view depicting an assembly comprising a saddle and an undersaddle compartment for a motorcycle, there being depicted in Fig. 11 the saddle in a closed configuration and an object blocking system according to a further embodiment, for blocking an object in the undersaddle compartment, such an object blocking system being depicted in a configuration in which it blocks the object in Fig. 8;
- Fig. 12 is a flat and diagrammatic top view of the object blocking system in Fig. 11 and of the object in Fig. 11 in the configuration in Fig. 11.

Equal or similar elements are indicated with the same numerals in the accompanying figures Fig.1-Fig.6. Moreover, equal or similar elements are indicated with the same numerals in the accompanying figures Fig.7-Fig.12.

It is worth noting that the terms "inner" and "outer" in the present description refer to the center of the storage compartment.

It is also worth noting that the terms "top", "bottom", "upper", "lower", "vertical", "horizontal" in the present description are meant in reference to a motorcycle or an assembly comprising a lid and a storage compartment integrated in or connected to a motorcycle in a normal condition of use in which the motorcycle or assembly is not tilted and the lid is in the closed configuration in which it closes the storage compartment.

With reference to Figs.1-2, such drawings diagrammatically show a cross section of an storage assembly or storage container of a motorcycle according to a first embodiment, which generally is indicated as a whole with numeral 1. The storage assembly or storage container is a top box 1 in the example. However, it is worth noting that the teachings of the present description are not limited to the application to a top box but may be applied in general to other types of storage containers of a motorcycle, such as for example a saddlebag of a motorcycle, for example a saddlebag of the type suitable for being fastened laterally to the motorcycle. According to one embodiment, top box 1 is suitable for being integrated in a motor scooter. However, it is worth noting that the teachings of the present description generally are applicable to all two- or three-wheel motorcycles which may be provided with a storage container. It is also worth noting that for the purposes of the present description, the term "motorcycle" generally is meant in a manner to include for example, and not limited to, mopeds, motor scooters, etc.

Top box 1 comprises a container body 31-33 which defines a storage compartment 3 and a lid 2 functionally connected to the container body 31-33. The container body comprises an access opening 36, a bottom 31 opposite to the access opening 36 and a side wall 32 which extends perimetrally connected to bottom 31. Lid 2 comprises a first face 21 of lid and an opposite second face 22 of lid. Lid 2 is operatively connected to the storage compartment 3 so as to take on an open configuration, in which it allows access to the storage compartment 3 by means of an access opening 36, opposite to bottom 31, and a closed configuration, in which it closes the access opening 36, thus preventing access to the storage compartment 3. In other words, in a manner in itself known, in the closed configuration, lid 2 closes the storage compartment 3 at the top.

With reference to Figures 1 to 3, top box 1 comprises an object blocking system 4 arranged in the container body 31, 33 for blocking an object 5, such as e.g. a helmet 5, accommodated in the container body 31-33. In particular, the object blocking system 4 comprises an elastic membrane 41 having a first face 411 and a second face 412 opposite to each other. The elastic membrane 41 is prepared in the container body 31-33 so as to have, in the closed configuration of lid 2, the first face 411 facing towards the second face 22 of saddle 2 and the second face 412 facing towards bottom 31 of the container body 31-33. According to a preferred embodiment, the elastic membrane 41 comprises a perimeter edge 413 and is coupled to the container body 31-33 along said perimeter edge 413. According to a preferred embodiment, the elastic membrane 41 is removably coupled to the container body 31-33. According to a preferred embodiment, in order to fasten the elastic membrane 41 to the container body 31-33, the object blocking system 4 comprises at least one fastening element 415 which may be associated with the elastic membrane 41 and/or the container body 31-33. According to a preferred embodiment, the aforesaid at least one fastening element 415 comprises a plurality of fastening elements 415, preferably at least three fastening elements 415. Preferably, such fastening elements 415 are distributed along the perimeter edge 413 of the elastic membrane 41, as shown for example in Fig. 3. In the example disclosed, the object blocking system 4 not exhaustively comprises a plurality of fastening rings 415, which may be closed when they are manufactured and mounted on edge 413 of the elastic membrane 41; in which case membrane 41 would be coupled in a non-removable manner to the container body 31-33. However, it is apparent that alternative fastening elements may be used to rings 415 for fastening the elastic membrane 41 to body 31-33. For example, however without any limitation, the fastening element 415 may comprise a plurality of simple or safety hooks (not depicted), which may be fastened to the container body 31-33 and are directly engaged in the edge of the elastic membrane 41. In this case, the elastic membrane 41 may easily be dismounted from the container body 31-33. Alternatively, the fastening element 415 may comprise for example and non-exhaustively, a zipper (not depicted) of which a first part of zipper is fastened, e.g. sewn, to edge 413 of the elastic membrane 41, and a second part of zipper, joined to the first part of zipper, is fastened, e.g. riveted, to the side wall 32 of the container body 31-33.

It is worth noting that the elastic membrane 41 can be fastened at a convenient height inside the container body 31-33 such as to allow elastically blocking object 5, and more preferably helmet 5, against the second face 22 of lid 2 when lid 2 takes on the closed configuration. In particular, the side wall 32 of the container body 31-33 comprises a first portion of wall 321 located on the side of the access opening 36, and a second portion of wall 322 located on the side of bottom 31. According to one embodiment, the first portion of wall 321 and the second portion of wall 322 correspond to a first half 321 and a second half 322 of the side wall 32, respectively. According to a preferred embodiment, the elastic membrane 41 is coupled to the first portion of wall 321 of the side wall 32. According to a convenient embodiment, the elastic membrane 41 in particular is fastened to a first edge 34 or upper edge 34 of the side wall 32. In other words, edge 34 is the edge of the side wall 32 which delimits the access opening 36 to the storage compartment 3. With reference to Fig. 1, according to a preferred embodiment, the elastic membrane 41 is suitable for taking on a planar configuration (Fig. 1) in which such a membrane is tensioned and is horizontally or substantially horizontally extended in the storage compartment 3. In other words, the elastic membrane 41 is parallel or substantially parallel to bottom 31 of the container body 31-33 in the respective planar configuration. With reference to Fig. 2, the elastic membrane 41 is suitable for taking on a blocking configuration (Fig. 2) in which it is elastically deformed and it is suitable for blocking object 5. Practically, the elastic membrane 41 is suitable for carrying and housing object 5 (and any possible further objects) resting on top of membrane 41 in the blocking configuration. Practically, membrane 41 forms a substantially bag-shaped configuration in the blocking configuration, in which object 5 is contained therein. In such a configuration of the elastic membrane 41, object 5 (and any possible further objects) is pushed by the elastic membrane 41 against the second face 22 of lid 2 when lid 2 takes on the closed configuration. Object 5 (and any further objects resting on the elastic membrane 41) is therefore blocked by the face 22 of lid 2 which counters the elasticity of the elastic membrane 41. According to a preferred embodiment, the second face 22 of lid 2 conveniently may be lined with soft material in order not to damage the objects it holds against the elastic membrane 41. Preferably, such a soft material is also sound-proofing to avoid or reduce noise.

Referring now to Fig. 4, such a drawing shows a top box according to a second embodiment in which it is indicated as a whole with numeral 1A. Top box 1A comprises an object blocking system 4A for blocking object 5 in the storage compartment 3. Top box 1A differs from the above-described top box 1 only in that the object blocking system 4A comprises an elastic mesh 41A instead of the above-described elastic membrane 41. In particular, the elastic mesh 41A has a first face 411A and a second face 412A opposite to each other, and is coupled to the container body 31-33. Moreover, the elastic mesh 41A is arranged so as to have, in the closed configuration of lid 2, the first face 411A facing towards the second face 22 of lid and the second face 412A facing towards bottom 31 of the container body 31-33. According to a preferred embodiment, the elastic mesh 41A is removably coupled to the container body 31-33. According to a preferred embodiment, in order to fasten the elastic mesh 41 to the container body 31-33, the object blocking system 4A comprises the aforesaid at least one fastening element 415 which may be associated with the elastic mesh 41 and/or the container body 31-33.

According to a preferred embodiment, the elastic mesh 41A comprises a perimeter edge 413A and is coupled to the container body 31-33 along said perimeter edge 413A. In general, everything described above in relation to the object blocking system 4 and to the elastic membrane 41 is valid, *mutatis mutandis*, for the object blocking system 4A and for the elastic mesh 41A. For this reason, for the purposes of the brevity of the description, the object blocking system 4A and the elastic mesh 41A are not described in further detail.

Referring now to Fig. 5, such a drawing shows a top box according to a third embodiment in which it is indicated as a whole with numeral 1B. Top box 1B comprises an object blocking system 4B for blocking object 5 in the storage compartment 3. Top box 1B differs from the above-described top box 1A in that the object blocking system 4B comprises an elastic mesh 41B which is coupled to a different part of the container body 31-33 with respect to the elastic mesh 41A. The elastic mesh 41B has a first face 411B and a second face 412B opposite to each other, and is arranged so as to have, in the closed configuration of lid 2, the first face 411B facing towards the second face 22 of lid and the second face 412B facing towards bottom 31 of the container body 31-33. According to a preferred embodiment, the elastic mesh 41B is removably coupled to the container body 31-33. Preferably, the elastic mesh 41B is coupled to the container body 31-33 by means of the aforesaid at least one fastening element 415. According to a preferred embodiment, the elastic mesh 41B comprises a perimeter edge 413B and is coupled to the container body 31-33 along said perimeter edge 413B. The elastic mesh 41B may be coupled to the second portion of wall 322 of the side wall 32 of the container body 31-33 or to bottom 31 of the container body 31-33 or, as in the example, to a joining portion 33 of the container body 31-33, which joining portion 33 joins bottom 31 and the side wall 32. According to an embodiment, the elastic mesh 41B is suitable for taking on a planar configuration in which such a membrane is tensioned and is horizontally or substantially horizontally extended in the storage compartment 3.

According to the invention, the elastic mesh 41B comprises an opening mouth 414B for inserting/extracting object 5 (and any further objects) through the elastic mesh 41B. Apparently, in addition to the opening mouth 414B, the elastic mesh 41B also comprises a plurality of secondary openings 416B which correspond to the links 416B of the elastic mesh 41B. The opening mouth 414B is capable of being widened and narrowed. More specifically, the main opening 414B is capable of being widened to allow object 5 to be inserted and extracted through mesh 41B while it is capable of being narrowed (preferably also up to being completely closed) to avoid object 5 from crossing mesh 41B when such an object 5 is blocked by the elastic mesh 41B.

Practically, in the case of the object blocking system 4B shown in Figures 5 to 6, object 5 (and any further objects) to be retained is elastically blocked with bottom 31 of the container body (31-33). More preferably, in the case of the object blocking system 4B, object 5 to be retained is introduced through the opening mouth 414B of the elastic mesh 41B to be blocked between the elastic mesh 41B and bottom 31 of the container body 31-33. Basically, the elastic mesh 41B essentially is shaped like a bag having the aforesaid opening mouth 414B and a perimeter edge 413B, or lower edge 413B, which is fastened to the joining portion 33 of the container body 31-33. According to one embodiment, a cord 417B extending about such an opening 414B is associated with the opening mouth 414B. Cord 417B may be manually pulled to narrow or close the opening mouth 414B and may be blocked, preferably by means of a fastener 418B, such as for example, a fastener of the type used for backpacks, so as to block object 5 between the elastic mesh 41B and bottom 31 of the container body 31-33.

According to an alternative embodiment, an annular elastic which extends about mouth 414B and which is suitable for narrowing or closing the opening mouth 414B to prevent object 5 from coming out by retaining it between the elastic mesh 41B and bottom 31 of the container body 31-33, may be associated with the opening mouth 414B. Apparently, various further alternative methods for allowing the opening mouth 414B are known to the person skilled in the art and for brevity of description are not herein described.

According to an alternative embodiment (not depicted), top box 1B may comprise an elastic membrane in place of the elastic mesh 41B. In this case, all that described above with reference to the elastic mesh 41B is valid, *mutatis mutandis*, for the variant with elastic membrane. For brevity of description, such a variant is therefore not described in further detail.

It is worth noting that although certain specific embodiments of the present invention were described above, several modifications and/or variants may be made with respect to that described above by mere way of example.

For example, it is worth noting that in general, the elastic membrane 41 or the elastic meshes 41A, 41B may be prepared in the container body 31-33 so as to have, when lid 2 takes on the closed configuration, the first face 411, 411A, 411B facing towards the second face 22 of lid and the second face 412, 412A, 412B facing towards bottom 31 of the container body 31-33 so that the elastic membrane 41 or the elastic meshes 41A, 41B are adapted to elastically block object 5 against the second face 22 of lid 2 and/or against side wall 32 and/or against said bottom 31 when lid 2 takes on the closed configuration. In other words, in general the elastic membrane 41 or the elastic meshes 41A, 41B may be prepared in the container body 31-33 so that the elastic membrane 41 or the elastic meshes 41A, 41B are adapted to elastically block object 5 against at least one between the second face 22 of lid 2, the side wall 32 and bottom 31 when lid 2 takes on the closed configuration.

It is worth noting that for brevity of description, a motorcycle including a storage container according to the present description, was not described. However, a motorcycle including a storage container according to the present description also is intended herein described. Indeed, a person skilled in the art who knows the field of motorcycles well would have no problem to integrate a storage container according to the present description, in a motorcycle.

According to that described above, it may be understood how a storage container according to the present description allows the above-mentioned objects to be achieved with reference to the known art.

In particular, it is worth noting that a storage container according to the present description conveniently allows both avoiding or reducing the possibility of an object to be transported from being damaged during the operation of the motorcycle and of eliminating or reducing the noise during the operation thereof, thus simultaneously allowing one or more objects to be transported to be arranged/ extracted in/from the storage compartment in a particularly easy and quick manner.

The principle of the invention being understood, the embodiments and manufacturing details may largely vary with respect to that described and illustrated by mere way of non-limiting example, without departing from the scope of the invention as defined in the appended claims.

With reference to Figs. 7-8, such drawings diagrammatically show a cross section of an assembly 1' for a motorcycle according to a first embodiment, which generally is indicated as a whole with numeral 1'. According to one embodiment, assembly 1' is suitable for being integrated in a motor scooter. However, it is worth noting that the teachings of the present description generally are applicable to two- or three-wheel motorcycles provided with a saddle and an undersaddle compartment. It is also worth noting that for the purposes of the present description, the term "motorcycle" generally is meant in a manner to include for example, and not limited to, mopeds, motor scooters, etc.

Assembly 1' comprises a lid 2' and a storage compartment 3'. According to an embodiment the lid 2' is a saddle 2' whereas the storage compartment 3' is an undersaddle compartment 3'. The undersaddle compartment 3' comprises a container body 31-33. The container body 31-33 comprises an access opening 36, a bottom 31 opposite to the access opening 36 and a side wall 32 which extends perimetrally connected to bottom 31. Saddle 2' comprises a first face 21 of saddle shaped for the seat of a driver of the motorcycle and an opposite second face 22 of saddle suitable for facing towards the undersaddle compartment 3'. According to one embodiment, the second face 22 is a face of the saddle plate of saddle 2', i.e. a face of the rigid part of saddle 2' adapted to provide the support for the driver. In particular, face 22 preferably is the lower end face of the saddle plate of saddle 2'. Saddle 2' is operatively connected to the undersaddle compartment 3' so as to take on an open configuration in which it allows access to the undersaddle compartment 3' by means of the access opening 36, and a closed configuration in which it closes the access opening 36 of the undersaddle compartment 3' thus preventing access to the undersaddle compartment 3'. In other words, in a manner in itself known, in the closed configuration, saddle 2' serves as lid which closes the undersaddle compartment 3' at the top.

With reference to Figs. 7-9, assembly 1' comprises an object blocking system 4 arranged in the container body 31 which is adapted to block an object 5, such as e.g. a helmet 5, accommodated in the container body 31-33. In particular, the object blocking system 4 comprises an elastic membrane 41 having a first face 411 and a second face 412 opposite to each other. The elastic membrane 41 is prepared in the container body 31-33 so as to have the first face 411 facing towards the second face 22 of saddle 2' and the second face 412 facing towards bottom 31 of the container body 31-33. According to a preferred embodiment, the elastic membrane 41 comprises a perimeter edge 413 and is coupled to the container body 31-33 along said perimeter edge 413. According to a preferred embodiment, the elastic membrane 41 is removably coupled to the container body 31-33. According to a preferred embodiment, in order to couple the elastic membrane 41 to the container body 31-33, the object blocking system 4 comprises at least one fastening element 415 which may be associated with the elastic membrane 41 and/or the container body 31-33. According to a preferred embodiment, the aforesaid at least one fastening element 415 comprises a plurality of fastening elements 415, preferably at least three fastening elements 415. Preferably, such fastening elements 415 are distributed along the perimeter edge 413 of the elastic membrane 41, as shown for example in Fig. 9. In the example disclosed, the object blocking system 4 not exhaustively comprises a plurality of fastening rings 415, which may be closed when they are manufactured and mounted on edge 413 of the elastic membrane 41, in which case membrane 41 is coupled in a non-removable manner to the container body 31-33. However, it is apparent that various fastening elements may be used as an alternative to the plurality of rings 415 for coupling the elastic membrane 41 to the body 31-33. For example, however without any limitation, the aforesaid at least one fastening element 415 may comprise a plurality of simple or safety hooks (not depicted), which may be fastened to the container body 31-33 and are directly engaged in the edge of the elastic membrane 41. In this case, the elastic membrane 41 may easily be dismounted from the container body 31-33. Alternatively, the aforesaid at least one fastening element 415 may comprise for example and non-exhaustively, a zipper (not depicted) of which a first part of zipper is fastened, e.g. sewn, to edge 413 of the elastic membrane 41, and a second part of zipper, joined to the first part of zipper, is fastened, e.g. riveted, to the side wall 32 of the container body 31-33.

It is worth noting that the elastic membrane 41 can be fastened at a convenient height inside the container body 31-33 such as to allow elastically blocking object 5, and more preferably helmet 5, against the second face 22 of saddle 2' when saddle 2' takes on the closed configuration. In particular, the side wall 32 of the container body 31-33 comprises a first portion of wall 321 located on the side of the access opening 36, and a second portion of wall 322 located on the side of bottom 31. According to one embodiment, the first portion of wall 321 and the second portion of wall 322 correspond to a first and a second half of the side wall 32, respectively. According to a preferred embodiment, the elastic membrane 41 is coupled to the first portion 321 of the side wall 32. According to a convenient embodiment, the elastic membrane 41 in particular is coupled to a first edge 34 or upper edge 34 of the side wall 32. In other words, edge 34 is the edge of the side wall 32 which delimits the access opening 36 to the undersaddle compartment 3'. With reference to Fig. 7, according to a preferred embodiment, the elastic membrane 41 is suitable for taking on a planar configuration (Fig. 7) in which such a membrane is tensioned and is horizontally or substantially horizontally extended in the undersaddle compartment 3'. In other words, the elastic membrane 41 is parallel or substantially parallel to bottom 31 of the container body 31-33 in the respective resting configuration. With reference to Fig. 8, the elastic membrane 41 is suitable for taking on a blocking configuration (Fig. 8) in which it is elastically deformed and it is suitable for blocking object 5. Practically, the elastic membrane 41 is suitable for carrying and housing object 5 (and any further objects) resting on of membrane 41, in the blocking configuration. Membrane 41 forms a substantially bag-shaped configuration in the blocking configuration, in which object 5 is contained therein. In such a configuration of the elastic membrane 41, object 5 (and any further objects) is elastically pushed by the elastic membrane 41 against the second face 22 of saddle 2' when saddle 2' takes on the closed configuration. Object 5 (and any further objects resting on the elastic membrane 41) is therefore blocked by the face 22 of saddle 2' which counters the elasticity of the elastic membrane 41. According to a preferred embodiment, the second face 22 of saddle 2' conveniently may be lined with soft material in order to not damage the objects it holds against the elastic membrane 41. Preferably, such a soft material is also sound-proofing to avoid or reduce noise.

Referring now to Fig. 10, such a drawing shows an assembly according to a second embodiment in which it is indicated as a whole with numeral 1A'. Assembly 1A' comprises an object blocking system 4A arranged in the container body (31-33) which is adapted to block an object (5) accommodated in the container body (31-33). Assembly 1A' differs from the above-described assembly 1' only in that the object blocking system 4A comprises an elastic mesh 41A instead of the above-described elastic membrane 41. In particular, the elastic mesh 41A has a first face 411A and a second face 412A opposite to each other, and is coupled to the container body 31-33. Moreover, the elastic mesh 41A is arranged so as to have, in the closed configuration of saddle 2', the first face 411A facing towards the second face 22 of saddle and the second face 412A facing towards bottom 31 of the container body 31-33. According to a preferred embodiment, the elastic mesh 41A is removably coupled to the container body 31-33. According to a preferred embodiment, in order to couple the elastic MESH 41 to the container body 31-33, the object blocking system 4A comprises the aforesaid at least one fastening element 415 which may be associated with the elastic mesh 41 and/or the container body 31-33.

According to a preferred embodiment, the elastic mesh 41A comprises a perimeter edge 413A and is coupled to the container body 31-33 along said perimeter edge 413A. In general, everything described above in relation to the object blocking system 4 and to the elastic membrane 41 is valid, mutatis mutandis, for the object blocking system 4A and for the elastic mesh 41A. For this reason, for the purposes of the brevity of the description, the object blocking system 4A and the elastic mesh 41A are not described in further detail.

Referring now to Fig. 11, such a drawing shows an assembly according to a third embodiment in which it is indicated as a whole with numeral 1B'. Assembly 1B' comprises an object blocking system 4B for blocking object 5 in the undersaddle compartment 3'. Assembly 1B' differs from the above-described assembly 1A' in that the object blocking system 4B comprises an elastic mesh 41B which is fastened to a different part of the container body 31-33 with respect to the elastic mesh 41A. The elastic mesh 41B has a first face 411B and a second face 412B opposite to each other, and is arranged so as to have, in the closed configuration of saddle 2', the first face 411B facing towards the second face 22 of saddle and the second face 412B facing towards bottom 31 of the container body 31-33. According to a preferred embodiment, the elastic mesh 41B is removably fastened to the container body 31-33. Preferably, the elastic mesh 41B is fastened to the container body 31-33 by means of the aforesaid at least one fastening element 415. According to a preferred embodiment, the elastic mesh 41B comprises a perimeter edge 413B and is coupled to the container body 31-33 along said perimeter edge 413B. The elastic mesh 41B may be coupled to the lower half of wall 322 of the side wall 32 of the container body 31-33 or to bottom 31 of the container body 31-33 or, as in the example, to a joining portion 33 of the container body 31-33, which joining portion 33 joins bottom 31 and the side wall 32. According to an embodiment, the elastic mesh 41B is suitable for taking on a planar configuration in which such a membrane is tensioned and is horizontally or substantially horizontally extended in the storage compartment 3'.

According to the embodiments, the elastic mesh 41B comprises an opening mouth 414B for inserting/extracting object 5 (and any further objects) into/from the container body 31-33 through the elastic mesh 41B. Apparently, in addition to the opening mouth 414B, the elastic mesh 41B also comprises a plurality of secondary openings 416B which correspond to the links 416B of the elastic mesh 41B. The opening mouth 414B is capable of being widened and narrowed. More specifically, the opening mouth 414B is capable of being widened to allow object 5 to be inserted and extracted through mesh 41B while it is capable of being narrowed (preferably also up to being completely closed) to avoid object 5 from crossing mesh 41B when such an object 5 is blocked by the elastic mesh 41B.

Practically, in the case of the object blocking system 4B shown in Figs.11-12, object 5 (and any possible further objects) to be retained is introduced through the main opening 414B of the elastic mesh 41B to be blocked between the elastic mesh 41B and bottom 31 of the container body 31-33. Basically, the elastic mesh 41B essentially is shaped like a bag having the aforesaid main opening 414B and a perimeter edge 413B, or lower edge 413B, which is coupled to the joining portion 33 of the container body 31-33. According to one embodiment, a cord 417B extending about such an opening 414B is associated with the main opening 414B. Cord 417B may be manually pulled to narrow or close the main opening 414B and may be blocked, preferably by means of a fastener 418B, such as for example, a fastener of the type used for backpacks, so as to block object 5 between the elastic mesh 41B and bottom 31 of the container body 31-33.

According to an alternative embodiment, an annular elastic which extends about opening 414B and which is suitable for narrowing or closing opening 414B to prevent object 5 from coming out by retaining it between the elastic mesh 41B and bottom 31 of the container body 31-33, may be associated with the main opening 414B. Apparently, various further alternative methods for allowing the main opening 414B are known to the person skilled in the art and are not herein described for brevity of description.

According to an alternative embodiment (not depicted), assembly 1B' may comprise an elastic membrane in place of the elastic mesh 41B. In this case, all that described above with reference to the elastic mesh 41B is valid, mutatis mutandis, for the variant with elastic membrane. For brevity of description, such a variant is therefore not described in further detail.

It is worth noting that although certain specific embodiments of the present invention were described above, several modifications and/or variants may be made with respect to that described above by mere way of example, without departing from the scope of this invention defined by the appended claims.

For example, it is worth noting that in general, the elastic membrane 41 or the elastic meshes 41A, 41B may be prepared in the container body 31-33 so as to have, when saddle 2' takes on the closed configuration, the first face 411, 411A, 411B facing towards the second face 22 of saddle and the second face 412, 412A, 412B facing towards bottom 31 of the container body 31-33 so that the elastic membrane 41 or the elastic meshes 41A, 41B are adapted to elastically block object 5 against the second face 22 of saddle 2' or against the side wall 32 or against bottom 31 when saddle 2' takes on the closed configuration. In other words, in general the elastic membrane 41 or the elastic meshes 41A, 41B may be prepared in the container body 31-33 so that the elastic membrane 41 or the elastic meshes 41A, 41B are adapted to elastically block object 5 against at least one between the second face 22 of saddle 2', the side wall 32 and bottom 31 when saddle 2' takes on the closed configuration.

It is worth noting that for brevity of description, a motorcycle including an assembly comprising a saddle and an undersaddle compartment according to the present description, also was not described. However, a motorcycle including an assembly comprising a saddle and an undersaddle compartment according to the present description also is intended herein described. Indeed, a person skilled in the art who knows the field of motorcycles well would have no problem to integrate an assembly according to the present description, in a motorcycle.

According to that described above, it may be understood how an assembly comprising a saddle and an undersaddle compartment according to the present description allows the above-mentioned objects to be achieved with reference to the known art.

In particular, it is worth noting that an assembly according to the present description conveniently allows both avoiding or reducing the possibility of an object to be transported from being damaged during the operation of the motorcycle, and eliminating or reducing the noise during the operation thereof, thus simultaneously allowing one or more objects to be transported to be arranged/extracted in/from the undersaddle compartment in a particularly easy and quick manner.

The principle of the invention being understood, the embodiments and manufacturing details may largely vary with respect to that described and illustrated by mere way of non-limiting example, without departing from the scope of the invention as defined in the appended claims.

## Claims

1. Assembly (1;1A;1B;1';1A';1B') comprising a lid (2;2') and a storage compartment (3;3') for a motorcycle, the storage compartment (3;3') comprising a container body (31-33),
wherein the container body comprises an access opening (36), a bottom (31) opposite to said access opening (36) and a side wall (32) which extends perimetrally connected to the bottom (31),
wherein the lid (2;2') comprises a first face (21) of lid and an opposite second face (22) of lid,
the lid (2;2') being operatively connected to the storage compartment (3;3') so as to be capable of taking on an open configuration wherein it allows access to the storage compartment (3;3') by means of said access opening (36), and a closed configuration wherein it closes said access opening (36), thus preventing access to the storage compartment (3;3'); wherein said assembly (1;1A;1B;1';1A';1B') comprises an object blocking system (4; 4A; 4B) arranged in the container body (31, 33) and adapted to block an object (5) accommodated in the container body (31, 33), the object blocking system (4; 4A; 4B) comprising an elastic membrane (41) or an elastic mesh (41A; 41B) having a first face (411, 411A, 411B) and a second face (412, 412A, 412B) opposite to each other, the elastic membrane (41) or elastic mesh (41A; 41B) being arranged in the container body (31-33) so that when the lid (2;2') takes on the closed configuration, it has the first face (411, 411A, 411B) facing towards the second face (22) of lid and the second face (412, 412A, 412B) facing towards the bottom (31) of the container body (31-33),
wherein the side wall (32) of the container body (31-33) comprises a first portion of wall (321) located on the side of the access opening (36) and a second portion of wall (322) located on the side of said bottom (31), wherein the container body (31-33) comprises a joining portion (33) between said bottom (31) and said side wall (32), wherein the elastic membrane or the elastic mesh (41B) is coupled to the second portion of wall (322) of the side wall (32) of the container body (31-33) or to the bottom (31) of the container body (31-33) or to said joining portion (33), wherein the elastic membrane or the elastic mesh (41B) is adapted to elastically block said object (5) against the bottom (31) of the container body (31-33) when the lid (2) takes on the closed configuration, and **characterized in that** the elastic membrane or the elastic mesh (41B) comprises an opening mouth (414B) for inserting/extracting said object (5) through the elastic membrane or the elastic mesh (41B), said opening mouth (414B) being capable of being widened and narrowed.

2. Assembly (1;1A;1B;1';1A';1B') according to claim 1, wherein the elastic membrane (41) or the elastic mesh (41A; 41B) comprises a perimeter edge (413; 413A; 413B) and is coupled to the container body (31-33) along said perimeter edge (413; 413A; 413B).

3. Assembly (1;1A;1B;1';1A';1B') according to claim 1 or 2, wherein the elastic membrane (41) or the elastic mesh (41A; 41B) is removably coupled to the container body (31-33).

4. Assembly (1;1A;1B;1';1A';1B') according to any one of the preceding claims, wherein the elastic membrane (41) or the elastic mesh (41A) is suitable for taking on a planar configuration wherein it is tensioned and is horizontally or substantially horizontally extended in the storage compartment (3;3').

5. Assembly (1'; 1A'; 1B') according to any of the preceding claims, wherein said storage compartment is the undersaddle compartment (3') of the motorcycle and said lid is a saddle (2') shaped for the seat of a driver of the motorcycle.

6. Assembly (1; 1A; 1B) according to according to any of the preceding claims, wherein said assembly is a top box or a saddlebag of a motorcycle.

7. A motorcycle comprising an assembly (1;1A;1B;1';1A';1B') as defined in any one of the preceding claims.

## Patentansprüche

1. Anordnung (1; 1A; 1B; 1'; 1A'; 1B'), umfassend einen Deckel (2; 2') und ein Lagerfach (3; 3') für ein Motorrad, wobei das Lagerfach (3; 3') einen Behälterkörper (31 bis 33) umfasst, wobei der Behälterkörper eine Zugangsöffnung (36), einen der Zugangsöffnung (36) gegenüberliegenden Boden (31) und eine Seitenwand (32) umfasst, die sich am Umfang mit dem Boden (31) verbunden erstreckt,
wobei der Deckel (2; 2') eine erste Deckelseite (21) und eine gegenüberliegende zweite Deckelseite (22) umfasst,
wobei der Deckel (2; 2') funktionsmäßig mit dem Lagerfach (3; 3') derart verbunden ist, dass er in der Lage ist, eine offene Konfiguration anzunehmen, bei der er mittels der Zugangsöffnung (36) Zugang zum Lagerfach (3; 3') ermöglicht, und eine geschlossene Konfiguration, bei der er die Zugangsöffnung (36) schließt, wodurch der Zugang zum Lagerfach (3; 3') verhindert wird; wobei die Anordnung (1; 1A; 1B; 1'; 1A'; 1B') ein Objektblockiersystem (4; 4A; 4B) umfasst, das in dem Behälterkörper (31, 33) angeordnet ist und ausgelegt ist, um ein im Behälterkörper (31, 33) untergebrachtes Objekt (5) zu blockieren, wobei das Objektblockiersystem (4; 4A; 4B) eine elastische Membran (41) oder ein elastisches Netz (41A; 41B) umfasst, die bzw. das eine erste Fläche (411, 411A, 411B) und eine gegenüberliegende zweite Fläche (412, 412A, 412B) aufweist, wobei die elastische Membran (41) oder das elastische Netz (41A; 41B) derart im Behälterkörper (31 bis 33) angeordnet ist, dass, wenn der Deckel (2; 2') die geschlossene Konfiguration annimmt, die erste Seite (411, 411A, 411B) der zweiten Deckelseite (22) zugewandt ist und die zweite Seite (412, 412A, 412B) dem Boden (31) des Behälterkörpers (31 bis 33) zugewandt ist,
wobei die Seitenwand (32) des Behälterkörpers (31 bis 33) einen ersten Wandabschnitt (321) umfasst, der sich an der Seite der Zugangsöffnung (36) befindet, und einen zweiten Wandabschnitt (322), der sich an der Seite des Bodens (31) befindet, wobei der Behälterkörper (31 bis 33) einen Verbindungsabschnitt (33) zwischen dem Boden (31) und der Seitenwand (32) umfasst, wobei die elastische Membran oder das elastische Netz (41B) mit dem zweiten Wandabschnitt (322) der Seitenwand (32) des Behälterkörpers (31 bis 33) oder dem Boden (31) des Behälterkörpers (31 bis 33) oder dem Verbindungsabschnitt (33) verbunden ist, wobei die elastische Membran oder das elastische Netz (41B) ausgelegt ist, das Objekt (5) elastisch gegen den Boden (31) des Behälterkörpers (31 bis 33) zu blockieren, wenn der Deckel (2) die geschlossene Konfiguration annimmt, und **dadurch gekennzeichnet, dass** die elastische Membran oder das elastische Netz (41B) eine Öffnungsmündung (414B) zum Einlegen/Entnehmen des Objekts (5) durch die elastische Membran oder das elastische Netz (41B) umfasst, wobei die Öffnungsmündung (414B) in der Lage ist, erweitert und verengt zu werden.

2. Anordnung (1; 1A; 1B; 1'; 1A'; 1B') nach Anspruch 1, wobei die elastische Membran (41) oder das elastische Netz (41A; 41B) eine Umfangskante (413; 413A; 413B) umfasst und entlang der Umfangskante (413; 413A; 413B) mit dem Behälterkörper (31 bis 33) verbunden ist.

3. Anordnung (1; 1A; 1B; 1'; 1A'; 1B') nach Anspruch 1 oder 2, wobei die elastische Membran (41) oder das elastische Netz (41A; 41B) entfernbar mit dem Behälterkörper (31-33) verbunden ist.

4. Anordnung (1; 1A; 1B; 1'; 1A'; 1B') nach einem der vorhergehenden Ansprüche, wobei die elastische Membran (41) oder das elastische Netz (41A) geeignet ist, eine planare Konfiguration anzunehmen, in der sie bzw. es gespannt ist und sich im Lagerfach (3; 3') horizontal oder im Wesentlichen horizontal erstreckt.

5. Anordnung (1'; 1A'; 1B') nach einem der vorhergehenden Ansprüche, wobei das Lagerfach das Untersattelfach (3') des Motorrads ist und der Deckel ein Sattel (2') ist, der für den Sitz eines Fahrers des Motorrades geformt ist.

6. Anordnung (1; 1A; 1B) nach einem der vorhergehenden Ansprüche, wobei die Anordnung ein Heckkasten oder eine Satteltasche eines Motorrads ist.

7. Motorrad, umfassend eine Anordnung (1; 1A; 1B; 1'; 1A'; 1B') nach einem der vorhergehenden Ansprüche.

## Revendications

1. Ensemble (1 ; 1A ; 1B ; 1'; 1A'; 1B') comprenant un couvercle (2 ; 2') et un compartiment de stockage (3 ; 3') pour une motocyclette, le compartiment de stockage (3 ; 3') comprenant un corps de contenant (31-33),
dans lequel le corps de contenant comprend une ouverture d'accès (36), un fond (31) opposé à ladite ouverture d'accès (36) et une paroi latérale (32) qui s'étend raccordée de manière périmétrique au fond (31),
dans lequel le couvercle (2 ; 2') comprend une première face (21) de couvercle et une seconde face opposée (22) de couvercle,
le couvercle (2 ; 2') étant relié fonctionnellement au compartiment de stockage (3 ; 3') de manière à pouvoir adopter une configuration ouverte dans laquelle il donne accès au compartiment de stockage (3 ; 3') au moyen de ladite ouverture d'accès (36), et une configuration fermée dans laquelle il ferme ladite ouverture d'accès (36), empêchant ainsi l'accès au compartiment de stockage (3 ; 3') ;
dans lequel ledit ensemble (1 ; 1A ; 1B ; 1' ; 1A' ; 1B') comprend un système de blocage d'objet (4 ; 4A ; 4B) disposé dans le corps de contenant (31, 33) et conçu pour bloquer un objet (5) reçu dans le corps de contenant (31, 33), le système de blocage d'objet (4 ; 4A ; 4B) comprenant une membrane élastique (41) ou une maille élastique (41A ; 41B) ayant une première face (411, 411A, 411B) et une seconde face (412, 412A, 412B) opposées l'une à l'autre, la membrane élastique (41) ou la maille élastique (41A ; 41B) étant disposée dans le corps du contenant (31-33) de telle sorte que lorsque le couvercle (2 ; 2') adopte la configuration fermée, il présente la première face (411, 411A, 411B) tournée vers la seconde face (22) du couvercle et la seconde face (412, 412A, 412B) tournée vers le fond (31) du corps de contenant (31-33),
dans lequel la paroi latérale (32) du corps de contenant (31-33) comprend une première partie de paroi (321) située sur le côté de l'ouverture d'accès (36) et une seconde partie de paroi (322) située sur le côté dudit fond (31), dans lequel le corps de contenant (31-33) comprend une partie de jonction (33) entre ledit fond (31) et ladite paroi latérale (32), dans lequel la membrane élastique ou la maille élastique (41B) est accouplée à la seconde partie de paroi (322) de la paroi latérale (32) du corps de contenant (31-33) ou au fond (31) du corps de contenant (31-33) ou à ladite partie de jonction (33), dans lequel la membrane élastique ou la maille élastique (41B) est conçue pour bloquer de manière élastique ledit objet (5) contre le fond (31) du corps de contenant (31-33) lorsque le couvercle (2) adopte la configuration fermée, et **caractérisé en ce que** la membrane élastique ou la maille élastique (41B) comprend une embouchure d'ouverture (414B) pour insérer/extraire ledit objet (5) à travers la membrane élastique ou la maille élastique (41B), ladite embouchure d'ouverture (414B) pouvant être élargie et rétrécie.

2. Ensemble (1 ; 1A ; 1B ; 1' ; 1A' ; 1B') selon la revendication 1, dans lequel la membrane élastique (41) ou la maille élastique (41A ; 41B) comprend un bord périmétrique (413 ; 413A ; 413B) et est accouplée au corps de contenant (31-33) le long dudit bord périmétrique (413 ; 413A ; 413B).

3. Ensemble (1 ; 1A ; 1B ; 1' ; 1A' ; 1B') selon la revendication 1 ou 2, dans lequel la membrane élastique (41) ou la maille élastique (41A ; 41B) est accouplée de manière amovible au corps de contenant (31-33).

4. Ensemble (1 ; 1A ; 1B ; 1' ; 1A' ; 1B') selon l'une quelconque des revendications précédentes, dans lequel la membrane élastique (41) ou la maille élastique (41A) est conçue pour adopter une configuration plane dans laquelle elle est tendue et s'étend horizontalement ou sensiblement horizontalement dans le compartiment de stockage (3 ; 3').

5. Ensemble (1' ; 1A' ; 1B') selon l'une quelconque des revendications précédentes, dans lequel ledit compartiment de stockage est le compartiment (3') sous la selle de la motocyclette et ledit couvercle est une selle (2') formant le siège d'un conducteur de la motocyclette.

6. Ensemble (1 ; 1A ; 1B) selon l'une quelconque des revendications précédentes, dans lequel ledit ensemble est un top-case ou une sacoche de selle d'une motocyclette.

7. Motocyclette comprenant un ensemble (1 ; 1A ; 1B ; 1' ; 1A' ; 1B') tel que défini dans l'une quelconque des revendications précédentes.
